# EUROPEAN PATENT APPLICATION

(11) **EP 3 012 452 A1**
(43) Date of publication of application: **27.04.2016**
(21) Application number: 14189754.6
(22) Date of filing: 21.10.2014
(51) Int. Cl.: F04B 1/12, F04B 13/02, F04C 14/18, G05D 11/00

(54) **Device for setting a volumetric flow rate ratio and fluid treatment apparatus**

(71) Applicant: Brita GmbH, 65232 Taunusstein (DE)
(72) Inventor: Reder, Ernst, 55278 Hahnheim (DE); Prokasky, Roger, 65428 Rüsselsheim (DE)
(74) Representative: van Lookeren Campagne, Constantijn August

(57) **Abstract**

A device for setting a volumetric flow rate ratio between fluid flows through at least a first and a second conduit section (27,28;69-71;111-113) is arranged to be connected to the conduit sections (27,28;69-71) such that each of at least the first and second conduit sections (27,28;69-71;111-113) has a respective one of coupled positive displacement machine associated with it. The device is arranged with each of the coupled positive displacement machines having each respective outlet (73,74;75) in fluid communication with only the associated one of the conduit sections (27,28;69-71;111-113). Alternatively, the device is arranged with each of the coupled positive displacement machines having each respective inlet in fluid communication with only the associated one of the conduit sections (27,28;69-71;111-113).

## Description

The invention relates to a device for setting a volumetric flow rate ratio between fluid flows through at least a first and a second conduit section.

The invention also relates to an apparatus for treating a fluid, including:
an inlet for receiving fluid;
at least a first fluid treatment part;
a branch point for separating a flow of fluid from the inlet into at least two flows of fluid led through separate conduits, such that at least one of the flows is led through the first fluid treatment part and another of the flows bypasses the first fluid treatment part;
a mixing location for reuniting the flows of fluid; and
a device for setting a volumetric flow rate ratio between the flows of fluid.

The invention also relates to a use of such a device.

WO 2009/101188 A1 discloses an apparatus for treating liquids comprising a container provided with treatment material and a connecting device. The connecting device comprises a first connecting conduit for the supply of liquid, a second connecting conduit for the removal of treated liquid and a bypass conduit, as well as a blending valve. The blending valve is arranged in a branch point of the first connecting conduit and the bypass conduit. On adjusting the blending valve, it changes the flow cross-sections to the bypass conduit and to the first connecting conduit in such a manner that the sum of the flow cross-sections remains constant. The bypass conduit may pass through the container. To this end, the container is preferably provided with two chambers, wherein one chamber may contain a filter material, and the second chamber, to which the bypass conduit leads, either contains no filter material or it is provided with a different filter material. In this embodiment, the two sub-flows are preferably combined within the apparatus, in particular within the container, and jointly removed via the second connecting conduit. According to a further embodiment, the at least two chambers are connected one after the other in flow sense. This opens up the possibility that both sub-flows pass through one of the two chambers, whereas only one sub-flow passes through the other chamber.

A problem of the known apparatus is that the volumetric flow rate ratio depends on the pressure differential. Only if the resistance to flow of the paths along which the two sub-flows travel varies in approximately the same manner with the pressure differential would the valve position correspond reliably to a particular known volumetric flow rate ratio. This is rarely the case or at least difficult to achieve.

It is an object of the invention to provide a device and apparatus of the types defined above in the opening paragraphs that allow for more reliable setting of the volumetric flow rate ratio in the case of the device and thus of the degree of treatment of the fluid in the case of the apparatus.

This object is achieved according to a first aspect by the device according to the invention, which is characterised in that the device is arranged to be connected to the conduit sections such that each of at least the first and second conduit sections has a respective one of coupled positive displacement machine associated with it, and in that the device is arranged with one of:
(i) each of the coupled positive displacement machines having each respective outlet in fluid communication with only the associated one of the conduit sections; and
(ii) each of the coupled positive displacement machines having each respective inlet in fluid communication with only the associated one of the conduit sections.

Positive displacement machines are closed machines. As such, they include a chamber or casing with at least one inlet and at least one outlet. At least one movable member is arranged within the chamber or casing to execute a cyclical movement. A specific, metered volume passes from the inlet(s) to the outlet(s) with each cycle of movement of the at least one movable member. Such machines are known *per se* in the form of pumps (when driven by an external source of energy) or volume counters (driven by the pressure difference between the at least one inlet and the at least one outlet). In the devices described herein, the positive displacement machines are coupled, i.e. the cyclical movements of the movable members of the respective positive displacement machines are synchronised. In an embodiment, the coupling may be mechanical. Because the positive displacement machines associated with each of the first and second conduit sections are coupled, one cycle of movement of the movable member(s) in the chamber of one of the machines corresponds in a fixed manner to a particular number of one or more cycles or to a particular fraction of a cycle of movement of the movable members in the chamber of the other of the machines. There being a particular metered volume associated with each of the machines, it follows that there is a particular ratio between the volumetric rates of flow through the respective machines. In one alternative, each positive displacement machine has its outlet in fluid communication with only the associated one of the conduit sections. Because each of the first and second conduit sections receives only the flow from the associated one of the positive displacement machines, the inlets of the conduit sections are isolated from each other. The volumetric rate of flow through each conduit section is thus determined only by the speed at which the associated displacement machine is operating. The same is true for the alternative in which each positive displacement machine has its inlet in fluid communication with only the associated one of the conduit sections. In that case, the outlets of the conduit sections are isolated from each other. Each delivers fluid in a set proportion to the others.

It is also possible for there to be conduit sections (e.g. the first and second conduit sections) delivering fluid to associated respective coupled positive displacement machines and conduit sections (e.g. third and fourth conduit sections) supplied with fluid by associated respective coupled positive displacement machines in a configuration in which the supplying conduit sections are fluidly isolated from each other, the coupled positive displacement machines are fluidly isolated from each other and the conduit section supplied with fluid are fluidly isolated from each other. The volumetric flow rate ratio is then still set by means of the coupled positive displacement machines.

In an embodiment, the volumetric flow rate ratio set by the device is adjustable.

Thus, the device finds application in a range of apparatus in which this feature is desirable. Examples include apparatus comprising a manifold to which multiple filter cartridges can be connected, wherein certain fractions of the fluid received by the manifold are passed through different filter cartridges in dependence on the composition of the fluid to be treated. An alternative example includes a filter head, to which a single cartridge with multiple separate chambers arranged in parallel is attachable, wherein the device can be used to set the volumetric flow rate ratio between sub-flows directed to different ones of the chambers and bypassing the others. A particular such application involves the removal of carbonate hardness from drinking water or process water, where it is desirable to set the pH of the treated water by decarbonising only some of the water. The device offers an alternative to closed-loop control systems that are required if it is not possible to split a flow of water to be treated accurately into sub-flows.

In a particular embodiment, a metered volume of at least one of the positive displacement machines is adjustable to adjust the volumetric flow rate ratio.

An effect is that the volumetric flow rate ratio can be adjusted without having to provide a transmission mechanism with adjustable gearing. This reduces the amount of friction, allowing the positive displacement machines to be driven only by the fluid flow. Even where a transmission mechanism is provided to couple the positive displacement machines, the range of volumetric flow rate ratios that can be set is extended without having to extend the range of possible gearing ratios.

In a variant, the metered volume of only one of the positive displacement machines is adjustable to adjust the volumetric flow rate ratio.

An effect is to reduce the risk of leaks or bypasses due to imperfectly sealed moving parts.

In an embodiment, the coupled positive displacement machines comprise coupled turbines arranged to be driven only by the fluid flows.

This embodiment functions without electric or other motors to drive the pistons, rotors or gears of the positive displacement machines. Rather, the fluid drives the (possibly rotary) pistons. In particular where the fluid is a liquid, the ability to dispense with an electric power supply allows the apparatus in which the device is incorporated to be kept relatively simple.

In an embodiment, the positive displacement machines each include at least one rotor arranged to revolve within a chamber.

This embodiment includes amongst others machines functioning in the manner of internal or external gear pumps or meters. The various variants of this embodiment can be relatively compact compared to e.g. positive displacement machines with only pistons carrying out reciprocating motion in a cylinder. The rotors at least partially define the metered volume of the positive displacement machine of which they are a part, e.g. by comprising cavities for receiving the fluid or by defining cavities together with a further rotor.

In an embodiment, each rotor includes a body provided with at least one, for example multiple, cavities facing in radial direction towards a wall of the chamber in which it is arranged to revolve.

In a variant with only one rotor per chamber, the wall closes off the cavities as they rotate, so that a metered volume is enclosed between the wall and the body in the cavity. This is a relatively simple way of implementing a positive displacement machine with few moving parts. Where multiple cavities are provided, a relatively high rate of flow through the device can be achieved. In variants with meshing rotors, teeth of one rotor close off a cavity of the other rotor to define a metered volume between them.

In an embodiment in which the positive displacement machines each include at least one rotor arranged to revolve within a chamber, the chambers are provided in a common casing.

This embodiment reduces the number of seals and thus the risk of leaks from the device into its environment. The common casing may be comprised of multiple parts or the chambers may be defined in a single monolithic casing part. The latter may be in the shape of a cylinder closed at one axial end.

In a particular embodiment, the casing is provided with one of a shared inlet for distributing fluid to each of the coupled positive displacement machines and a shared outlet for delivering a mix of fluid from each of the coupled positive displacement machines.

This embodiment simplifies the device. In many types of apparatus for fluid treatment, the fluid to be treated is split into fractions that undergo different treatments or are not treated at all, whereupon these fractions are mixed. The relative sizes of the fractions determine the composition of the mix. By providing the casing with a shared inlet, the separation into fractions can occur in the device, making the apparatus incorporating the device more compact. Alternatively, where the outlet is shared, the mixing can take place in the device.

In an embodiment, the casing defines a further chamber for a positive displacement machine, having a port arranged to be brought into fluid communication with a further conduit section, the further chamber is empty of rotors and the port is blocked by a closure device.

In this embodiment, the device is modular in nature. It can be used to set the volumetric flow rate ratios between the flows through more than just the first and second conduit sections by adding a further positive displacement machine. If fewer conduit sections are to be connected, then at least the rotors of the further positive displacement machine are dispensed with to avoid providing the device with an unnecessarily high resistance to flow. Where each positive displacement machine has an outlet in fluid communication with only the associated one of the conduit sections, the port is for forming a further outlet. Where each positive displacement machine has an inlet in fluid communication with only the associated one of the conduit sections, the port is for forming a further inlet.

In an embodiment, each positive displacement machine includes a single rotor.

This reduces the number of moving parts, and thus the resistance to flow. In a system driven by the fluid flow only, this is of particular use. The rotor extends in radial direction essentially to a wall of the chamber. The metered volumes are enclosed between the rotor and this wall.

A particular variant of this embodiment further includes at least one wall, axially displaceable with respect to the body to adjust the volume of at least one of the at least one cavities, for example each of the cavities.

Thus the metered volume can be adjusted even in this relatively simple positive displacement machine. The body provided with the cavities is relatively simple, extending radially to the wall except where the cavities interrupt its contour, so that there is little risk of fluid bypassing the rotor. The moving wall bounds the cavity in axial direction and likewise extends to the wall in radial direction.

In an embodiment of the device, a rotor of the machine associated with the first conduit section and a rotor of the machine associated with the second conduit section are mounted on a common, rotatably journalled shaft.

This is a relatively simple way of coupling the positive displacement machines associated with the first and second conduit sections.

In an embodiment, wherein the chambers are provided in a common casing, and wherein a rotor of the machine associated with the first conduit section and a rotor of the machine associated with the second conduit section are mounted on a common, rotatably journalled shaft, the shaft extends through at least one wall partitioning the casing so as to separate a chamber of the positive displacement machine associated with the first conduit section from a chamber of the positive displacement associated with the second conduit section.

Thus, the positive displacement machines can be provided in a relatively simple manner in a common casing. The partitioning wall helps prevent leaks between the positive displacement machines, thus contributing to the reliability and accuracy with which the volumetric flow rate ratio is set.

In a particular variant of this embodiment, at least one of the at least one partitioning walls is fixed to rotate with the shaft within the casing.

Thus, the wall functions also to provide a bearing for the shaft. Manufacturing is simplifies, because it is possible to provide a single casing with a cavity into which a module comprising the shaft, rotary pistons and partitioning wall is inserted from one side. The cavity need be open on only one side to allow this.

In an embodiment of the device, at least one of the coupled positive displacement machines is provided with at least one piston, arranged to reciprocate in a piston-receiving cavity selectively in fluid communication with the associated conduit section, and a stroke of the at least one piston of at least one of the positive displacement machines in a phase in which the cavity is in fluid communication with the associated conduit section is adjustable.

In this embodiment, the volumetric flow rate ratio can be adjusted. Moreover, the coupled positive displacement machines function to a greater extent as reaction turbines than if the machines were to comprise only impellers.

In an embodiment, in which the positive displacement machines each include at least one rotor arranged to revolve within a chamber and each rotor includes a body provided with one, for example multiple, cavities, each piston-receiving cavity corresponds to a cavity in the rotor body. The rotor body thus functions selectively to place the cavity or cavities in fluid connection with the conduit section. Separate valves are not required, simplifying the device.

In a particular variant, the stroke is adjustable by means of a part of the positive displacement machine having an adjustable rotary position and providing a camming surface that the piston is arranged to follow when the rotor rotates.

The rotary position is essentially relative to the axis of rotation of the rotor. The part providing a camming surface may be positioned at an axial end of the chamber in which the rotor is arranged to revolve. It is therefore relatively accessible. A simple mechanism can be provided to adjust its rotary position.

In an embodiment of the device, at least the positive displacement machines associated with the first and second conduit sections are coupled via a transmission mechanism.

In a variant, a gear ratio of the transmission mechanism is variable.

Thus, it is possible to provide a range of volumetric flow rate ratios.

In a further variant, the transmission mechanism is capable of providing a gear ratio other than 1:1.

In this embodiment, it is possible to provide a relatively large volumetric flow rate ratio even if the positive displacement machines can have metered volumes that do not differ very much.

According to another aspect of the invention, there is provided an apparatus for treating a fluid, including:
an inlet for receiving fluid;
at least a first fluid treatment part;
a branch point for separating a flow of fluid from the inlet into at least two flows of fluid led through separate conduits; and
a device according to the invention for setting a volumetric flow rate ratio between the flows of fluid.

The first fluid treatment part may be arranged to add and/or remove at least one component from the fluid, for example. The branch point may be located in the first fluid treatment part. One of the at least two flows of fluid is treated, e.g. filtered, to a lesser degree than the other. The device according to the invention sets the volumetric flow rate ratio between the flows of fluid and thereby also how much of the fluid received at the inlet ends up as treated fluid.

In an embodiment of the apparatus, the first fluid treatment part is a fluid treatment part for the filtration of a liquid.

In this embodiment, the concentration of suspended or dissolved solids in a smaller sub-set of the flows is set by means of the device for setting a volumetric flow rate ratio.

In a particular variant of this embodiment, the branch point and the first fluid treatment part are comprised in a cross-flow filtration unit having an outlet for retentate and an outlet for filtrate and the device is arranged to set the volumetric flow rate ratio between the flows of retentate and filtrate.

A cross-flow filtration unit generally comprises a membrane module, a liquid inlet, an outlet for retentate and an outlet for filtrate, generally referred to as permeate. Some of the liquid entering through the liquid inlet passes through the membrane to form the permeate. Some of the liquid passes along the membrane to form the retentate. Where the pressure differential and pore sizes are such that the cross-flow filtration unit is used for reverse osmosis, the retentate is also referred to as concentrate. It has a higher concentration of suspended and/or dissolved solids. The device for setting a volumetric flow rate ratio can be used to set the flow rate ratio between the retentate flowing through a conduit connected to the outlet for retentate and the permeate flowing through a conduit connected to the outlet for permeate. This allows one to achieve a relatively consistent degree of filtration and thus a relatively consistent permeate quality.

In a variant of this embodiment, at least one of the coupled positive displacement machines is coupled to a hydraulic motor.

The other of the coupled positive displacement machines may constitute the hydraulic motor. In a variant, a further hydraulic motor is coupled to both of them. The hydraulic motor decreases the pressure of the permeate. It thereby increases a trans-membrane pressure differential across the membrane of the cross-flow filtration unit. This increases the permeate quality and may also increase the rate at which permeate is produced.

In another embodiment, the apparatus is arranged such that at least one of the flows is led through the first fluid treatment part and another of the flows bypasses the first fluid treatment part, and the apparatus further comprises a mixing location for reuniting the flows of fluid.

In this embodiment, the branch point is upstream of the first fluid treatment part. Rather than adapt the first fluid treatment part such that the degree of treatment of fluid passing through it is incomplete, the apparatus leads a relatively precisely known fraction of the fluid received at the inlet through the first fluid treatment part and the remainder to the mixing location so as to bypass the first fluid treatment part.

In an embodiment, the apparatus includes a replaceable fluid treatment cartridge, in which at least the first fluid treatment part is provided, and a cartridge head including an interface for removably connecting the fluid treatment cartridge to the cartridge head such that at least one fluid outlet of the cartridge head is connected to a fluid inlet of the fluid treatment cartridge and at least one fluid outlet of the fluid treatment cartridge is connected to a fluid inlet of the cartridge head.

Thus, the apparatus can be used to provide different kinds of (partial) treatment by selecting an appropriate cartridge. In variants in which the first fluid treatment part includes an exhaustible medium or another kind of device having a finite useful lifespan, replacement of the cartridge allows the useful lifespan of the apparatus to be much longer. The medium or device comprised in the first fluid treatment part can be recycled remotely.

In an embodiment, the interface includes a further fluid outlet of the cartridge head for connection to a further fluid inlet of the fluid treatment cartridge upon connection of the fluid treatment cartridge to the cartridge head, the branch point is located upstream of the fluid treatment cartridge and the further fluid inlet of the fluid treatment cartridge is in fluid communication with a fluid outlet of the fluid treatment cartridge such as to bypass the first fluid treatment part.

Thus, it is possible to provide a second or third fluid treatment part through which the fraction bypassing the first fluid treatment part is led without having to resort to a further cartridge. The device for setting the volumetric flow rate ratio may be located in the cartridge head, simplifying the cartridge.

In an embodiment, the mixing location is situated within the replaceable fluid treatment cartridge.

It is thus possible provide both fractions of the fluid with a common treatment within the cartridge. As an example, water can be partially decarbonised but completely freed of organic contaminants by providing the mixing location upstream or in a bed of activated carbon.

According to another aspect, the invention provides for the use of a device according to the invention in an embodiment of the apparatus according to the invention in which the branch point and the first fluid treatment part are comprised in a cross-flow filtration unit having an outlet for retentate and an outlet for filtrate and the device is arranged to set the volumetric flow rate ratio between the flows of retentate and filtrate to increase a trans-membrane pressure differential in the cross-flow filtration unit.

The invention will be explained in further detail with reference to the accompanying drawings, in which:
- Fig. 1: is a perspective view of an apparatus for treating a liquid comprising a single replaceable cartridge;
- Fig. 2: is a cross-section through a cartridge of the type shown in Fig. 1;
- Fig. 3: is a simplified diagram of a first apparatus of the type shown in Figs. 1 and 2;
- Fig. 4: is a perspective view of a first device for setting a volumetric flow rate ratio;
- Fig. 5: is a perspective view of a second device for setting a volumetric flow rate ratio;
- Fig. 6: is an exploded perspective view of the second device;
- Fig. 7: is an exploded plan view of the second device;
- Fig. 8: is a simplified diagram of a second apparatus for treating a liquid;
- Fig. 9: is a first cross-sectional view through a third device for setting volumetric flow rate ratios between flows through three conduit sections;
- Fig. 10: is a second cross-sectional view through the device of Fig. 9;
- Fig. 11: is a cross-sectional view of the device of Figs. 9 and 10 adapted for use with two fluid conduits;
- Fig. 12: is a side view of the device in the configuration of Fig. 11;
- Fig. 13: is a schematic diagram of a third liquid treatment apparatus, comprising the device of Figs. 9-12, but with the direction of flow reversed compared to the second apparatus;
- Fig. 14: is a schematic cross-sectional view from above through a device for setting volumetric flow rate ratios that is a modified version of the device of Figs. 9-12; and
- Fig. 15: is a schematic diagram of a fourth liquid treatment apparatus, which comprises the first or second device for setting a volumetric flow rate ratio.

As described below, an apparatus for treating a liquid is provided with a device for setting a volumetric flow rate ratio between liquid flows through at least a first and a second conduit section in the apparatus in order to ensure that the degree of treatment can be set relatively accurately and reliably. In the following, the case is described in which the liquid to be treated is an aqueous liquid, more particularly mains water. The apparatus is situated essentially at a point of use of the mains water. It is arranged to treat the water so as to condition it for use in one or more appliances (not shown), in particular appliances in which the water is heated, or heated and converted to steam. The appliances include beverage makers such as coffee makers for restaurants and cafés, steam cookers, dish washers and the like.

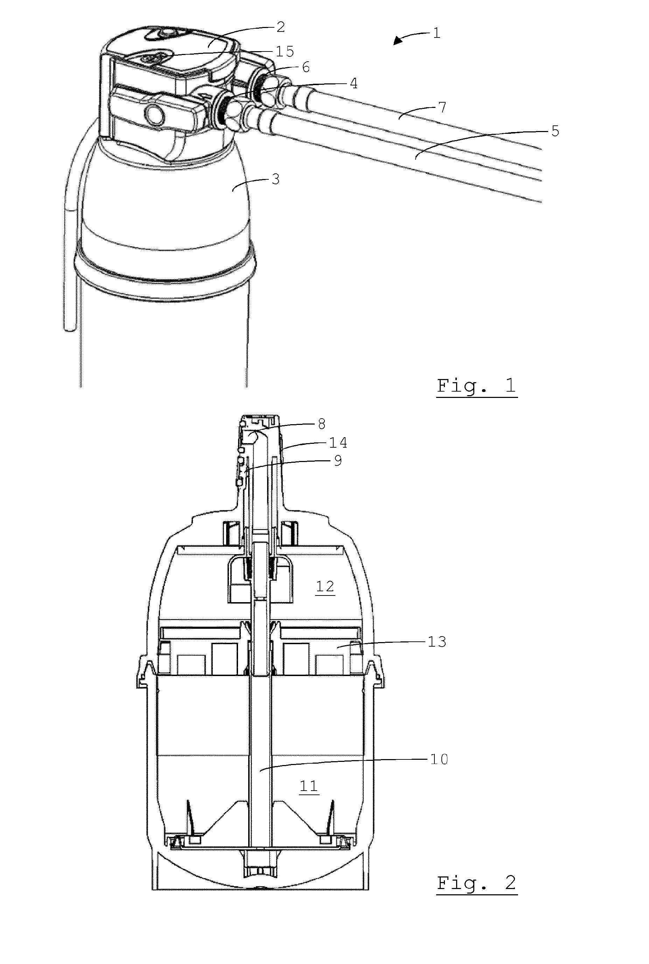

A basic apparatus 1 (Fig. 1) suitable for adaptation to include the device for setting a volumetric flow rate ratio includes a so-called filter head 2 and a replaceable liquid treatment cartridge 3. The filter head 2 includes an inlet connector 4 for connection to a supply conduit 5 for supplying liquid to be treated. It also includes an outlet connector 6 for connection to a delivery conduit 7 leading to an appliance for consuming the treated liquid. The connections are intended to be essentially permanent. The liquid treatment cartridge 3 is replaced, when exhausted, whereas the filter head 2 remains connected to the supply conduit 5 and the delivery conduit 7.

The liquid treatment cartridge 3 shown by way of example includes a first inlet 8 for receiving liquid to be treated and a second inlet 9 for receiving liquid to be treated. A fall tube 10 leads the liquid from the first inlet 8 to a first liquid treatment part. The first liquid treatment part includes a bed of granular liquid treatment medium arranged in a first section 11 of an interior of the liquid treatment cartridge 3.

The first liquid treatment part may include a medium for the treatment of liquid by sorption, including in particular ion exchange. In an embodiment, the medium includes a weakly acidic or a strongly acidic cation exchange resin. At least initially, the weakly acidic cation exchange resin will be mainly in the hydrogen form. When used to treat water, a weakly acidic cation exchange resin in the hydrogen form removes the components contributing to carbonate hardness (temporary hardness) from the water. As a result, the acidity of the treated water increases. By varying the degree of treatment in the apparatus 1, an acidity level suitable for the intended use of the treated liquid can be set. In an alternative embodiment, a cation exchange resin in the sodium form may be used to reduce the total hardness of the water. In both embodiments, activated carbon may be included in the medium as well. In an embodiment, there may further or alternatively be included a liquid treatment medium arranged to elute certain components, e.g. minerals, into the liquid.

In order to set the degree of treatment, e.g. to achieve a desired acidity or carbonate hardness level, a fraction of the liquid to be treated is led through the second inlet 9 to a second section 12 of the interior of the liquid treatment cartridge 12, such as to bypass the first section 11. A permeable structure 13 separates the first and second sections 11,12, so that they may contain different media for the treatment of liquid. The permeable structure 13 may be a frame supporting a fleece, for example. At least one of the degree of treatment and the type of treatment of liquid passing through the second liquid treatment part formed by liquid treatment medium in the second section 12 differs from that provided to liquid passing through the first liquid treatment part. The second liquid treatment part may include only activated carbon, for example.

The liquid led through the first liquid treatment part also passes through the second liquid treatment part, which thus forms a mixing location, at which the fractions passing into the liquid treatment cartridge 3 through the first and second inlets 8,9 are reunited before leaving the liquid treatment cartridge 3 through an outlet 14.

The filter head 2 includes an element 15 for adjusting the settings of a variable-ratio flow adjuster (not shown in Figs. 1 and 2) for setting a volumetric flow rate ratio between the flows of liquid led to the first and second inlets 8,9 of the liquid treatment cartridge 3. In this way, the degree of treatment in the first liquid treatment part of the mix of liquid that emerges from the outlet 14 of the liquid treatment cartridge 3 is also set. The filter head 2 includes a branch point at which the single flow of liquid to be treated received through the supply conduit 5 is separated into the two flows of liquid of which the volumetric flow rate ratio is set.

A mechanical interface is provided to lock the liquid treatment cartridge 3 to the filter head 2 in a releasable manner such that at least a liquid-tight connection between the inlets 8,9 and respective outlet ports (not shown) of the filter head 2 and the outlet 14 and an inlet port (not shown) of the filter head 2 is established.

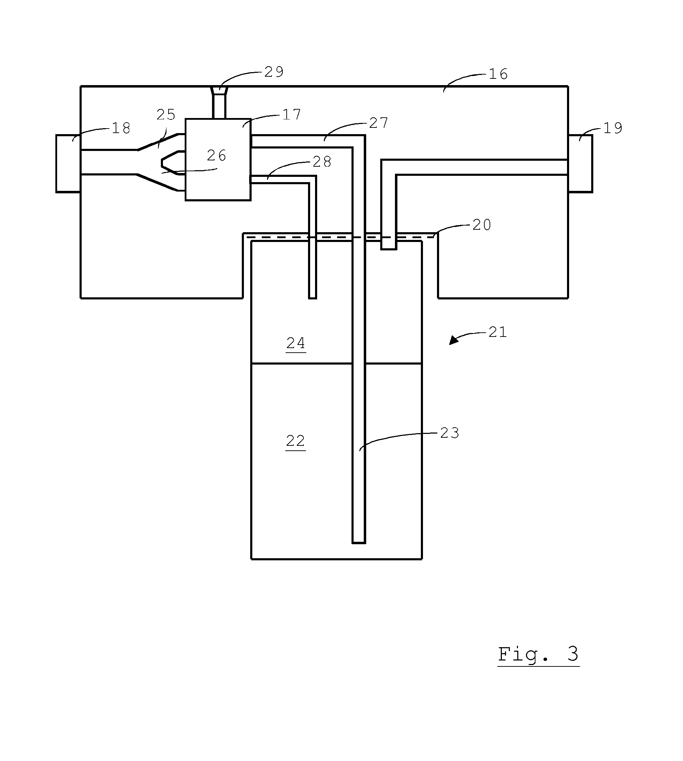

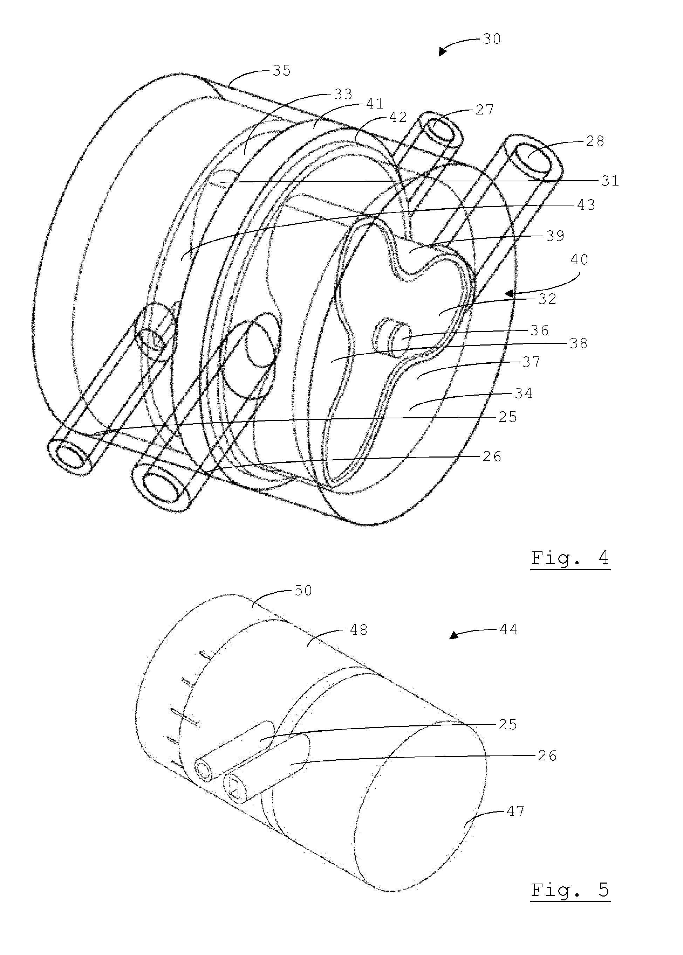

A first variant 16 of a filter head (Figs. 3,4) with a device 17 for setting a volumetric flow rate ratio so as to set a degree of liquid treatment can be of the type described above in relation to Fig. 1 and 2. It thus includes an inlet connector 18 and an outlet connector 19 for connection to a supply conduit and a delivery conduit respectively.

A mechanical interface 20 is provided to lock a liquid treatment cartridge 21 to the filter head 16 in a releasable manner. The liquid treatment cartridge 21 is of the same type as the cartridge 3 described above in relation to Figs. 1 and 2. It thus includes a housing including a first interior section 22 in which a liquid treatment medium is arranged to form a first liquid treatment part. A fall tube 23 leads to the first liquid treatment part. A second liquid treatment part is arranged downstream of the first liquid treatment part in a second section 24 of the interior of the liquid treatment cartridge 21. The second section 24 forms the mixing location where the flow of liquid through the first liquid treatment part is reunited with the flow of liquid that bypasses the first liquid treatment part. A single flow of liquid thus leaves the liquid treatment cartridge 21 to pass through the filter head 16 to the outlet connector 19 thereof. The liquid treatment media in the first and second liquid treatment parts are as described above for the liquid treatment cartridge 3 shown in more detail.

Within the filter head 16, a conduit leading from the inlet connector 18 to the ratio-setting device 17 branches into two inlet conduit sections 25,26 upstream of the latter. First and second outlet conduit sections 27,28 lead from the ratio-setting device 17 to respective outlets of the filter head 16 that are in liquid-tight connection with respective inlets of the liquid treatment cartridge 21. One of these terminates the fall tube 23. The other leads directly to the second section 24 of the interior of the liquid treatment cartridge 21.

The ratio-setting device 17 sets the volumetric flow rate ratio between the flows through the first and second outlet conduit sections 27,28. In the illustrated embodiment, the ratio is adjustable by means of an adjustment element 29 and optionally a tool for engaging the adjustment element 29. The adjustment element 29 may, for example, include a spindle with a head provided with a socket for a tool such as an Allen key.

With reference to Fig. 4, a first implementation 30 of the ratio-setting device 17 includes coupled positive displacement machines, arranged to be driven only by the fluid flows through the device 30. Each machine includes a rotor 31,32 arranged to revolve within a respective chamber 33,34 provided within a common casing 35. The chambers 33,34 are essentially circle-cylindrical in shape.

The rotors 31,32 are arranged on a common, rotatably journalled shaft 36, so that their rotation is synchronised. In this way, the two positive displacement machines are coupled. In alternative embodiment, separate shafts are provided, which are coupled. They may be coupled by a transmission mechanism, in particular a geared transmission mechanism such that their speed of revolution differs in accordance with a fixed ratio determined by the geared transmission mechanism.

The second rotor 32 includes a body that is essentially invariant in shape in axial direction (with reference to an axis of rotation). Seen in cross-section transverse to the axis of rotation, it has multiple lobes between which cavities 37-39 are defined. The tips of the lobes extend radially essentially to a wall of the second chamber 34. The second rotor 32 extends axially essentially to an essentially planar axial end wall 40 of the second chamber 34. Thus, a bypass of liquid is essentially prevented. Only metered volumes of liquid received in the cavities 37-39 can pass through the second chamber 34. The first rotor 31 and the first chamber 33 are of essentially the same configuration as the second rotor 32 and the second chamber 34.

The rotatably journalled shaft 36 extends in axial direction through partitioning walls 41,42 that partition a cylindrical cavity defined in the casing 35 into the first and second chambers 33,34. For ease of assembly, the shaft 36, rotors 31,32 and partitioning walls 41,42 may form a unit for insertion into the cylindrical cavity provided in the casing 35. In such an embodiment, the at least one partitioning wall 41,42 may be attached to the shaft 36 to rotate with the shaft 36 within the casing 35. In particular, at least one of the portioning walls 41,42 may be of one piece with at least one of the rotors 31,32. Suitable seals at a radially outer edge of the partitioning walls 41,42 essentially prevent liquid from leaking between the first and second chambers 33,34. In an alternative embodiment, the shaft 36 can be journalled to rotate with respect to at least one of the partitioning walls 41,42, which may be fixed in relation to the remaining walls of the chamber 33,34 of which it forms an axial end wall.

The first and second inlet conduit sections 25,26 connect to the first and second chambers 33,34 at ports arranged such that the liquid enters the chambers 33,34 in a transverse direction with respect to the axis of rotation of the rotors 31,32, but offset with respect to a radial direction through the axis of rotation. The first and second outlet conduit sections 27,28 are arranged similarly, but offset in opposite direction with respect to the axis of rotation. This allows the use of larger cavities 37-39. The rotors 31,32 function as radial flow impellers.

In the illustrated embodiment, the volumetric flow rate ratio is adjustable through displacement of a wall 43 with respect to the body of the first rotor 31. In this manner, the effective size of the first chamber 33 is adjustable, since the displaceable wall 43 in effect forms an axial end wall at an opposite end to the partitioning wall 41 defining the other axial end of the first chamber 33. The size of the cavities in the body of the first rotor 31 is adjusted in the process, since the displaceable wall 43 delimits the cavities axially. The displaceable wall 43 can be linked to the adjustment element 29 through a linkage (not shown) to convert e.g. rotation of the adjustment element 29 into axial displacement of the displaceable wall 43.

Thus, although the first and second rotors 31,32 always rotate at angular velocities of which the ratio is fixed, the volumetric flow rate ratio is adjustable by adjusting the metered volume of the first rotor 31.

A second implementation 44 (Figs. 5-7) of the ratio-setting device 17 of Fig. 3 is similar to the ratio-setting device 30 shown in Fig. 4, except that it does not function in part as an impulse turbine.

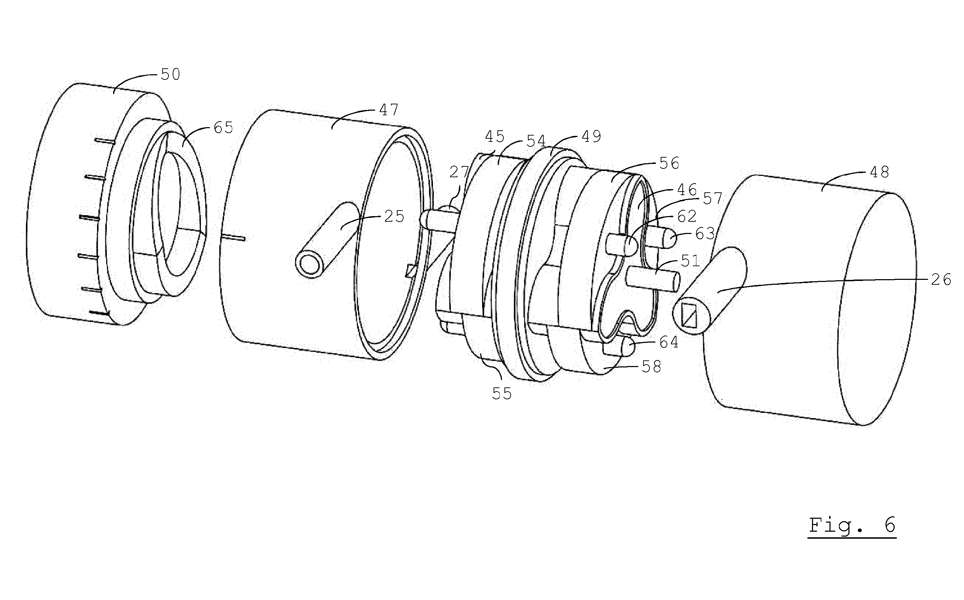

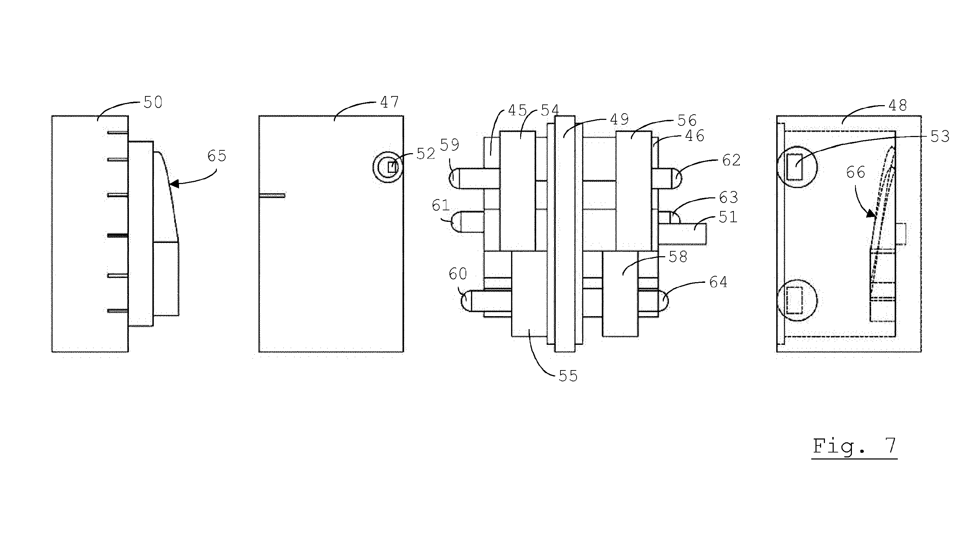

The second ratio-setting device 44 also includes two coupled positive displacement machines, arranged to be driven only by the fluid flows through the device 44. The machines include first and second rotors 45,46 respectively (Figs. 6,7). Each rotor 45,46 is arranged to revolve in a respective chamber. The chambers are provided in a casing including first and second casing end parts 47,48 and a middle part 49. The second casing end part 48 closes off the second ratio-setting device 44 at one axial end. An adjustment device 50 closes off the second ratio-setting device 44 and one of the chambers at the opposite axial end. The first and second casing end parts 47,48 are connected to the middle part 49 in an essentially liquid-tight manner, such that the middle part 49 closes off the chambers at axial ends opposite those closed off by the second casing end part 48 and the adjustment device 50 respectively. The middle part 49 thereby partitions the casing so as to separate the chamber of the positive displacement machine associated with the first inlet conduit section 25 from the one associated with the second inlet conduit section 26.

The first and second inlet conduit sections 25,26 connect to the first and second chambers at ports 52,53 arranged such that the liquid enters the chambers in a transverse direction with respect to the axis of rotation of the rotors 45,46, but offset with respect to a radial direction through the axis of rotation. The first and second outlet conduit sections 27,28 (only the first outlet conduit section 27 is discernible in Fig. 6) are arranged similarly, but offset in opposite direction with respect to the axis of rotation.

The rotors 45,46 are journalled to the middle part 49 of the casing. They are arranged on a common shaft 51 supported by the middle part 49. Their rotary movements are thus coupled in the sense of being synchronised.

Each rotor 45,46 includes a body provided with multiple cavities , three in this example. Pistons 54-58 are provided and arranged to reciprocate in the chambers of the positive displacement machines. More particularly, the pistons 54-58 are arranged to reciprocate in axial direction within the cavities of the rotors 45,46. The rotors 45,46 thus guide the axial movement of the pistons 54-58. Each piston 54-58 defines a wall, axially displaceable with respect to the body of the associated rotor 45,46 to adjust the volume of the cavity in which it reciprocates. The pistons 54-58 are provided with protruding followers 59-64, which cooperate with camming surfaces 65,66 with which the adjustment device 50 and the second casing end part 48 are provided. Thus, when the rotors 45,46 rotate, movement of the followers 59-64 along the camming surfaces 65,66 causes the pistons 54-58 to reciprocate. The camming surfaces 65,66 are arranged in the shape of circles centred on the axis of rotation of the rotors 45,46. Seen along their circumference, they comprise three sections: two sloping in axial direction and one of fixed axial position.

The rotary position of the adjustment device 50 with respect to an axis of rotation of the rotors 45,46 can be set by a user. This causes the strokes of the pistons 54,55 supported by the rotor 45 in the chamber defined by the first casing end part 47 in the phase of the rotation of the rotor 45 in which its cavities are in fluid communication with the inlet conduit section 25 to be adjusted. When the stroke is smaller than the maximum possible, the followers 59-61 are still in contact with a slanting section of the camming surface 65 when the cavity in which the associated piston 54,55 is arranged to reciprocate moves out of the fluid communication with the inlet conduit section 25. Since the stroke of the other pistons 56-58 in the corresponding phase is fixed, the volumetric flow rate ratio can be adjusted by setting the position of the adjustment device 50.

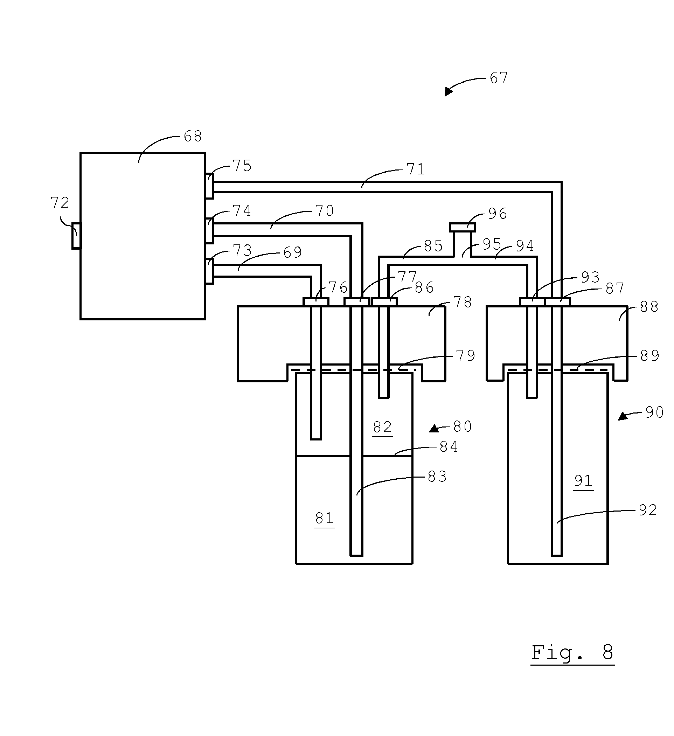

A second apparatus 67 for treating a liquid (Fig. 8) includes a device 68 for setting volumetric flow rate ratios between flows of liquid through three conduit sections 69-71. The device 68 has a single inlet connector 72 and three outlet connectors 73-75 for connecting it to the three conduit sections 69-71. Two conduit sections 69,70 lead to inlet connectors 76,77 of a first filter head 78. The first filter head 78 is provided with a mechanical interface 79 for locking a first liquid treatment cartridge 80 to the first filter head 78 in a releasable manner. The lock is such as to provide a liquid-tight connection between two outlets (not shown in detail in Fig. 8) of the first filter head 78 and respective inlets (not shown in detail in Fig. 8) of the first liquid treatment cartridge 80 and between an inlet (not shown in detail in Fig. 8) of the first filter head 78 and an outlet (not shown in detail in Fig. 8) of the first liquid treatment cartridge 80. The first liquid treatment cartridge 80 is essentially of the type described above in relation to Figs. 1 and 2, especially as regards the liquid treatment media contained therein.

Thus, a first liquid treatment part is provided in a first section 81 of an interior of the first liquid treatment cartridge 80. A second liquid treatment part is provided in a second section 82 of the interior of the first liquid treatment cartridge 80. The flow of liquid through the first conduit section 69 is directed to the second interior section 82 so as to bypass the first interior section 81. The flow of liquid through the second conduit section 70 is directed to the first interior section 81 through a fall tube 83. The first and second sections 81,82 are separated by a liquid-permeable barrier 84 allowing the liquid that reaches the first interior section 81 to flow into the second interior section 82. There, this flow of liquid is reunited with the flow of liquid into the first liquid treatment cartridge 80 that bypasses the liquid treatment part in the first interior section 81, so that the second interior section 82 provides a mixing location.

The mix of liquids leaves the first liquid treatment cartridge 80 through an outlet provided with a liquid-tight connection to an inlet of the first filter head 78 by means of the mechanical interface 79. It is then led through a first delivery conduit section 85 connected to an outlet connector 86 of the first filter head 78.

A third conduit section 71 connects a third outlet connector 75 of the device 68 for setting the volumetric flow rate ratios to an inlet connector 87 of a second filter head 88. The second filter head 88 is provided with a mechanical interface 89 for locking a second liquid treatment cartridge 90 to the second filter head 88 in a releasable manner. The mechanical interface 89 is arranged to provide a liquid-tight connection between an outlet (not shown in detail in Fig. 8) of the second filter head 88 and an inlet (not shown in detail in Fig. 8) of the second liquid treatment cartridge 90.

All of the liquid passing through the second liquid treatment cartridge 90 is treated in the same manner and to the same extent. In the illustrated embodiment, the second liquid treatment cartridge 90 includes a single chamber 91 for a liquid treatment medium, e.g. a granular liquid treatment medium. The liquid treatment medium may again include a liquid treatment medium for the treatment of liquid by sorption and/or elution. Examples include ion exchange resin, chelating resins, activated carbon and the like. Although the illustrated second liquid treatment cartridge 90 includes a fall tube 92 and is arranged to include a bed of granular liquid treatment medium, an alternative embodiment may include a hollow cylindrical liquid treatment block comprised of bound liquid treatment medium. In such an embodiment, the flow of liquid may be radially through the block.

The second filter head 88 is arranged to lead liquid treated in the second liquid treatment cartridge 90 to an outlet connector 93 connecting it to a second delivery conduit section 94.

The first and second delivery conduit sections 85,94 join at a mixing location 95, downstream of which a final connector 96 for connecting the apparatus 67 to a conduit leading to an appliance (not shown) is provided.

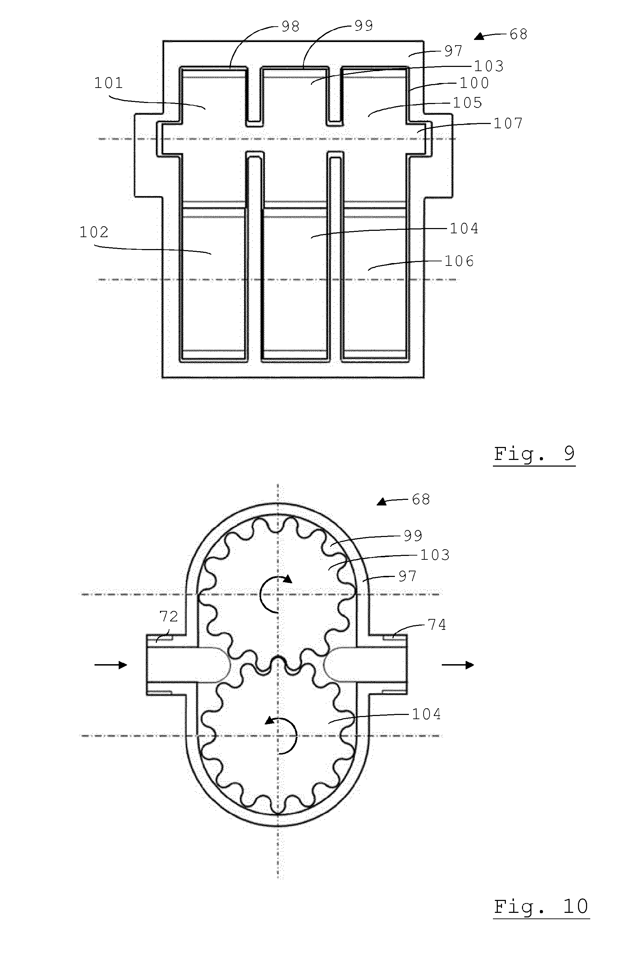

The device 68 for setting the volumetric flow rate ratios between the flows through the conduit sections 69-71 may be a variant of the device 30 of Fig. 4 or the device 44 of Figs. 5-7 with three chambers and rotors. Alternatively, it may include two such devices 30, one arranged downstream of the other. In the illustrated embodiment (Figs. 9-12) it includes coupled positive displacement machines. These are configured in the manner of gear pumps, except that they are turbines, driven only by the flow of liquid. As illustrated, the basic configuration is that also found in an external gear pump, with meshing gears journalled on respective axes. In an alternative embodiment, the configuration of an internal gear pump (gerotor) may be used.

As illustrated (Figs. 9,10), the device 68 includes a casing 97 on which the inlet connector 72 and outlet connectors 73-75 are provided.

In the illustrated example, three chambers 98,99,100 are provided within the casing 97. There may be a different number of chambers in an alternative embodiment. The inlet connector 72 is in fluid communication with each of them, so that a shared inlet for distributing liquid to each of the three coupled positive displacement machines included in the device 68 is provided. By contrast, each chamber 98-100 is in fluid communication with only one outlet (in the form of a respective one of the outlet connectors 73-75 in this example), which are thus isolated from one another.

A pair of meshing toothed rotors 101-106 is provided in each respective chamber 98-100. A first rotor 101,103,105 of each pair is mounted on a common, rotatably journalled shaft 107, such that their movement is synchronised. In the illustrated embodiment, a second rotor 102,104,106 of each pair is individually journalled for rotation within the chamber 98-100 containing it.

The size and number of the teeth of the meshing rotors 101-106 , the depths of the cavities between the teeth and the axial dimensions of the respective chambers 98-100 (and thus of the rotors 101-106 provided in each respective chamber 98-100) determine the metered volume of liquid passing through a particular one of the positive displacement machines per revolution of the rotor 101,103,105 in the set of coupled rotors. In an embodiment, at least one of these parameters differs between at least two of the coupled positive displacement machines, so that volumetric flow rate ratios different from 1:1:1 are set. This allows the use of the common shaft 107. In an alternative embodiment, individual shafts are provided, which are coupled via geared transmission mechanisms in order to set a particular ratio of frequencies of rotation. It is noted that volumetric flow rate ratios equal to 1:1:1 may be set in an alternative embodiment. This would be of use where the ratio might otherwise fluctuate to an undesirable extent.

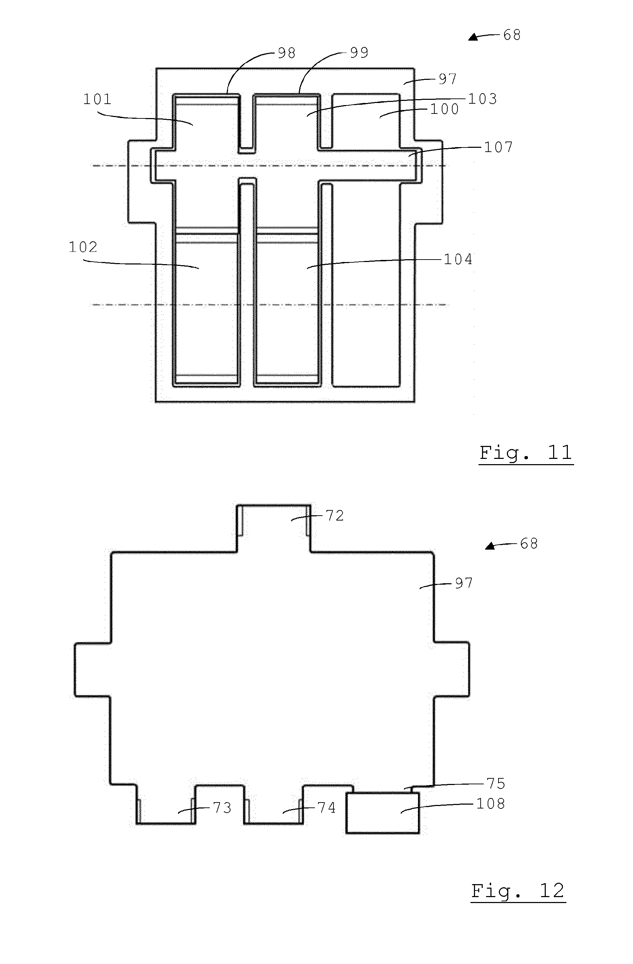

As shown in Figs. 11 and 12, it is possible to adapt the device 68 to set the volumetric flow rate ratio of flow through only two of the conduit sections 69-71 by removing one pair of meshing rotors 105,106 to leave one chamber 100 empty, but for the shaft 107. The outlet connector 75 for connecting that chamber 100 to a conduit section is closed by a cap 108.

Thus, the device 68 can be adapted for use with only the first filter head 78 of the apparatus 67 of Fig. 8, for example. It then determines the degree of treatment of the mix of liquid leaving through the outlet connector 93 by determining the volumetric flow rate ratio between the flows of liquid through the first and second conduit sections 69,70.

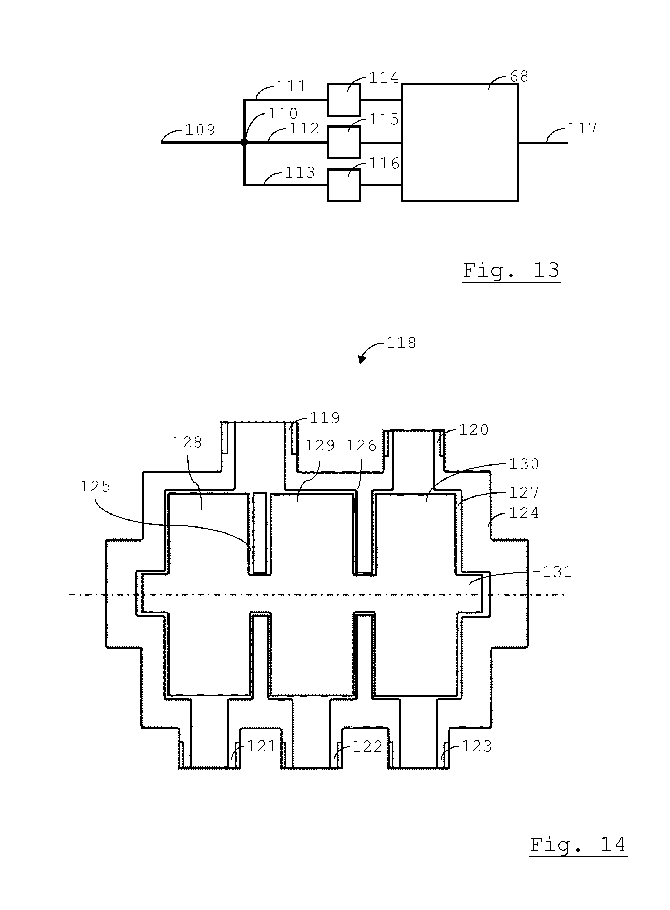

The device 68 can be used in a liquid treatment apparatus in which the direction of flow is reversed (Fig. 13). In such an embodiment, the inlet connector 72 becomes an outlet connector and mixing takes place within the device 68. Each chamber 98-100 is in fluid communication with only one inlet and receives a different type of fluid, for example. The proportions of the different fluids in the mix can be set relatively precisely and reliably with the device 68. The apparatus comprises (in this example) one inlet 109 for receiving liquid to be treated. The flow of liquid from the inlet 109 is split into three flows at a branch point 110, so that three conduit sections 111-113 lead to respective liquid treatment devices 114-116 or distinct liquid treatment parts of one or more such devices. The liquid treatment devices 114-116 may be liquid filtration devices for example. They may comprise only mechanical filtration parts or be configure to carry out a method of liquid treatment by sorption, which for present purposes includes ion exchange. The treatment in the liquid treatment devices 114-116 may be the same or differ in type and/or degree. The device 68 for setting the volumetric flow rate ratios sets the volumetric flow rate ratios between the flows of liquids passing through the liquid treatment devices 114-116. It also functions as a mixing device, in that a single flow of liquid of which the three different flows form the constituents emerges from the device 68 and passes to an outlet 117.

A device 118 (Fig. 14) for setting a volumetric flow rate ratio that is a modified version of the device 68 just discussed combines features of that device 68 with those of the first and second ratio-setting devices 30,44. It has two inlet connectors 119,120 and three outlet connectors 121-123 for connection to respective inlet conduit sections and outlet conduit sections (not shown). Like the device 68 of Figs. 9-12, the device 118 includes coupled positive displacement machines configured in the manner of gear pumps, except that they are turbines, driven only by the flow of liquid.

The device 118 includes a casing 124, on which the inlet connectors 119,120 and outlet connectors 121-123 are provided. Three chambers 125-127 are provided within the casing 124. A first inlet connector 119 is in fluid communication with only first and second chambers 125,126. A second inlet connector 120 is in fluid communication with only a third chamber 127. By contrast, each of the outlet connectors 121-123 is in fluid communication with only a respective one of the chambers 125-127, so that they are each isolated from the others.

A pair of meshing toothed rotors 128-130 is provided in each chamber 125-127. Only one of each pair is shown in Fig. 14. The rotors 128-130 illustrated in Fig. 14 are mounted on a common, rotatably journalled shaft 131, such that their movement is synchronised. The second rotors of each pair are individually journalled for rotation in the manner illustrated in Fig. 9 for the similar device 68.

The flow of liquid entering the device 118 through the second inlet connector 120 and leaving through the third outlet connector 123 is isolated from the flow of liquid entering through the first inlet connector 119. The latter flow is split at a branch point between the first and second chambers 125,126. One of the resulting two flows leaves the device 118 through the first outlet connector 121, the other through the second outlet connector 122.

The size and number of teeth of the meshing rotors 128-130, depths of the cavities between the teeth and the axial dimensions of the respective chambers 125-127 determine the metered volume of liquid passing through a particular one of the three coupled positive displacement machines per revolution of the rotor 128-130. At least one of these parameters may differ between at least two of the coupled positive displacement machines in one embodiment, with the consequence that volumetric flow rate ratios different from 1:1:1 are set. In another embodiment, they may be set such that the ratio is substantially equal to 1:1:1.

It is possible to journal the rotors 128-130 on individual shafts, coupled via geared transmission mechanisms to set a particular volumetric flow rate ratio.

Although the device 118 has been described as having two inlet connectors 119,120 and three outlet connectors 121-123, it can be connected such that the direction of flow is reversed. In that case, the device 118 functions as a mixing device, in that the liquid leaving the first and second chambers 125,126 is mixed before leaving the device 118.

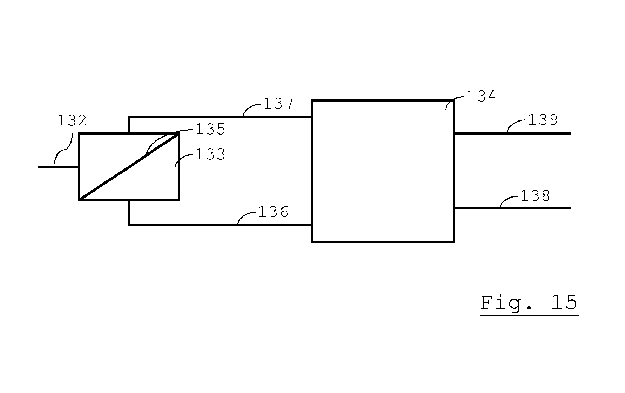

A particular type of liquid treatment apparatus (Fig. 15) includes an inlet 132 a cross-flow filtration unit 133 and a device 134 for setting a volumetric flow rate ratio of the type of the first ratio-setting device 30 (Fig. 4) or the second ratio-setting device 44 (Figs. 5-7). The cross-flow filtration unit 133 includes a semi-permeable membrane 135 and has an inlet, an outlet for permeate connected to a permeate conduit section 136 upstream of and connected to an inlet of the ratio-setting device 134, as well an outlet for retentate connected to a retentate conduit section 137 upstream of and connected to a further inlet of the ratio-setting device 134. The membrane 135 forms a branch point, at which the flow of liquid from the inlet is split into a flow of liquid to pass through the membrane 135 and one to pass across but not through the membrane 135.

Outlets of the ratio-setting device 134 are connected to respective downstream permeate and retentate conduit sections 138,139. The ratio-setting device 134 sets the volumetric flow rate ratio between the flows through the permeate conduit sections 136,138 , on the one hand, and the retentate conduit sections 137,139 on the other hand.

The pressure differential across the membrane 135 and its pore size may be such that the liquid treatment apparatus is capable of operating as a reverse osmosis liquid treatment apparatus. The at least one membrane may, for example, be provided with pores having a pore size of at most 10 Å. The cross-flow filtration unit 133 may include a spiral wound membrane module, a hollow fibre membrane module, a tubular membrane module and/or a membrane in sheet form mounted on a frame, for example.

The invention is not limited to the embodiments described above, which may be varied within the scope of the accompanying claims. For example, a device for setting a volumetric flow rate ratio of the type illustrated in Figs. 9-12 may be integrated into a filter head instead of being situated upstream of it.

In an embodiment in which the coupled positive displacement machines comprise coupled turbines arranged to be driven only by the fluid flows, the motive energy may be provided by a pump situated in one of the conduits or arranged to supply fluid to the device 17,30,44,68 under pressure.

In an embodiment of the device 68, an integrated hydraulic motor housed within the casing 97 may be arranged to drive the shaft 107. This is of use in the liquid treatment apparatus of Fig. 15. The ratio-setting device 134 is used to set the volumetric flow rate ratio between the flows through the permeate conduit sections 136,138, on the one hand, and the retentate conduit sections 137,139 on the other hand. The volumetric flow rate and the pressure in the retentate conduit sections 137,139 is substantially higher than in the permeate conduit sections 136,138. The retentate flow powers the ratio-setting device 134 to increase the trans-membrane pressure differential by decreasing the pressure in the permeate conduit section 136 connecting the ratio-setting device 134 to the cross-flow filtration unit 133. In this way, permeate can be produced with a higher and more constant efficiency. Where an additional hydraulic motor is integrated into the ratio-setting device 68,134, the production rate and the purity of the permeate can be increased yet further. In an embodiment of the apparatus of Fig. 15, the ratio-setting device 118 of Fig. 14 is used in reversed flow direction to mix untreated liquid with permeate at a particular ratio whilst also controlling the ratio between the permeate flow rate and the retentate flow rate.

### List of reference numerals

- 1: - Apparatus for treating a liquid
- 2: - Filter head
- 3: - Liquid treatment cartridge
- 4: - Inlet connector
- 5: - Supply conduit
- 6: - Outlet connector
- 7: - Delivery conduit
- 8: - First inlet
- 9: - Second inlet
- 10: - Fall tube
- 11: - First interior section
- 12: - Second interior section
- 13: - Permeable structure
- 14: - Outlet
- 15: - Adjustment element
- 16: - Filter head
- 17: - Ratio-setting device
- 18: - Inlet connector
- 19: - Outlet connector
- 20: - Mechanical interface
- 21: - Liquid treatment cartridge
- 22: - First interior section
- 23: - Fall tube
- 24: - Second interior section
- 25: - First inlet conduit section
- 26: - Second inlet conduit section
- 27: - First outlet conduit section
- 28: - Second outlet conduit section
- 29: - Adjustment element
- 30: - First ratio-setting device
- 31: - First rotor
- 32: - Second rotor
- 33: - First chamber
- 34: - Second chamber
- 35: - Casing
- 36: - Shaft
- 37: - First rotor cavity
- 38: - Second rotor cavity
- 39: - Third rotor cavity
- 40: - Axial end wall of second chamber
- 41: - First partitioning wall
- 42: - Second partitioning wall
- 43: - Displaceable wall
- 44: - Second ratio-setting device
- 45: - First rotor
- 46: - Second rotor
- 47: - First casing end part
- 48: - Second casing end part
- 49: - Casing middle part
- 50: - Adjustment device
- 51: - Shaft
- 52: - First port
- 53: - Second port
- 54: - Piston
- 55: - Piston
- 56: - Piston
- 57: - Piston
- 58: - Piston
- 59: - Follower
- 60: - Follower
- 61: - Follower
- 62: - Follower
- 63: - Follower
- 64: - Follower
- 65: - First camming surface
- 66: - Second camming surface
- 67: - Liquid treatment apparatus
- 68: - Device for setting volumetric flow rate ratios
- 69: - First conduit section
- 70: - Second conduit section
- 71: - Third conduit section
- 72: - Inlet connector
- 73: - First outlet connector
- 74: - Second outlet connector
- 75: - Third outlet connector
- 76: - First inlet connector of first filter head
- 77: - Second inlet connector of first filter head
- 78: - First filter head
- 79: - Mechanical interface
- 80: - First liquid treatment cartridge
- 81: - First interior section
- 82: - Second interior section
- 83: - Fall tube
- 84: - Liquid-permeable barrier
- 85: - First delivery conduit section
- 86: - Outlet connector of first filter head
- 87: - Inlet connector of second filter head
- 88: - Second filter head
- 89: - Mechanical interface
- 90: - Second liquid treatment cartridge
- 91: - Chamber
- 92: - Fall tube
- 93: - Outlet connector of second filter head
- 94: - Second delivery conduit section
- 95: - Mixing location
- 96: - Final connector
- 97: - Casing
- 98: - 1^{st} Chamber
- 99: - 2^{nd} Chamber
- 100: - 3^{rd} Chamber
- 101: - 1^{st} Rotor in 1^{st} chamber
- 102: - 2^{nd} Rotor in 1^{st} chamber
- 103: - 1^{st} Rotor in 2^{nd} chamber
- 104: - 2^{nd} Rotor in 2^{nd} chamber
- 105: - 1^{st} Rotor in 3^{rd} chamber
- 106: - 2^{nd} Rotor in 3^{rd} chamber
- 107: - Shaft
- 108: - Cap
- 109: - Inlet
- 110: - Branch point
- 111: - 1^{st} Conduit section
- 112: - 2^{nd} Conduit section
- 113: - 3^{rd} Conduit section
- 114: - 1^{st} Liquid treatment device
- 115: - 2^{nd} Liquid treatment device
- 116: - 3^{rd} Liquid treatment device
- 117: - Outlet
- 118: - Ratio-setting device
- 119: - 1^{st} Inlet connector
- 120: - 2^{nd} Inlet connector
- 121: - 1^{st} Outlet connector
- 122: - 2^{nd} Outlet connector
- 123: - 3^{rd} Outlet connector
- 124: - Casing
- 125: - 1^{st} Chamber
- 126: - 2^{nd} Chamber
- 127: - 3^{rd} Chamber
- 128: - 1^{st} Rotor
- 129: - 2^{nd} Rotor
- 130: - 3^{rd} Rotor
- 131: - Shaft
- 132: Inlet
- 133: - Cross-flow filtration unit
- 134: - Device for setting a volumetric flow-rate ratio
- 135: - Membrane
- 136: - Upstream permeate conduit section
- 137: - Upstream retentate conduit section
- 138: - Downstream permeate conduit section
- 139: - Downstream retentate conduit section

## Claims

**1.** Device for setting a volumetric flow rate ratio between fluid flows through at least a first and a second conduit section (27,28;69-71;111-113), **characterised in that**
the device is arranged to be connected to the conduit sections (27,28;69-71;111-113) such that each of at least the first and second conduit sections (27,28;69-71;111-113) has a respective one of coupled positive displacement machine associated with it, and **in that** the device is arranged with one of:
(i) each of the coupled positive displacement machines having each respective outlet (73-75) in fluid communication with only the associated one of the conduit sections (27,28;69-71;111-113); and
(ii) each of the coupled positive displacement machines having each respective inlet in fluid communication with only the associated one of the conduit sections (27,28;69-71;111-113).

**2.** Device according to claim 1,
wherein the volumetric flow rate ratio set by the device is adjustable.

**3.** Device according to claim 2,
wherein a metered volume of at least one of the positive displacement machines is adjustable to adjust the volumetric flow rate ratio.

**4.** Device according to any one of the preceding claims,
wherein the positive displacement machines each include at least one rotor (31,32;45,46;101-106;128-130) arranged to revolve within a chamber (33,34;98-100;125-127).

**5.** Device according to claim 4,
wherein each rotor (31,32;45,46;101-106;128-130) includes a body provided with at least one, for example multiple, cavities facing in radial direction towards a wall of the
chamber (33,34;98-100;125-127) in which it is arranged to revolve.

**6.** Device according to claim 4 or 5,
wherein the chambers (33,34;98-100; 125-127) are provided in a common casing (35;97;124).

**7.** Device according to claim 6,
wherein the casing (97;124) is provided with one of a shared inlet (72;119) for distributing fluid to each of the coupled positive displacement machines and a shared outlet for delivering a mix of fluid from each of the coupled positive displacement machines.

**8.** Device according to claim 6 or 7,
wherein the casing (97) defines a further chamber (100) for a positive displacement machine, having a port (75) arranged to be brought into fluid communication with a further conduit section (71), and
wherein the further chamber (100) is empty of rotors and the port (75) is blocked by a closure device (108).

**10.** Device according to any one of the preceding claims,
wherein at least one of the coupled positive displacement machines is provided with at least one piston (54,55), arranged to reciprocate in a piston-receiving cavity selectively in fluid communication with the associated conduit section (25), and
wherein a stroke of the at least one piston (54,55) of at least one of the positive displacement machines in a phase in which the cavity is in fluid communication with the associated conduit section (25) is adjustable.

**11.** Apparatus for treating a fluid, including:
an inlet (4;18;72;109;132) for receiving fluid;
at least a first fluid treatment part (114-116;133);
a branch point (110) for separating a flow of fluid from the inlet (4;18;72;109;132) into at least two flows of fluid led through separate conduits (27,28;69-71;111-113;136,137); and
a device (17;30; 44;68; 118;134) according to any one of claims 1-10 for setting a volumetric flow rate ratio between the flows of fluid.

**12.** Apparatus according to claim 11,
wherein the first fluid treatment part (133) is a fluid treatment part for filtration of a liquid.

**13.** Apparatus according to claim 12,
wherein the branch point and the first fluid treatment part are comprised in a cross-flow filtration unit (133) having an outlet for retentate and an outlet for filtrate, and
wherein the device is arranged to set the volumetric flow rate ratio between the flows of retentate and filtrate.

**14.** Apparatus according to claim 11 or 12,
arranged such that at least one of the flows is led through the first fluid treatment part and another of the flows bypasses the first fluid treatment part, and further comprising a mixing location (12;24;82;95) for reuniting the flows of fluid.

**15.** Use of a device according to any one of claims 1-10 in an apparatus according to claim 13 to increase a trans-membrane pressure differential in the cross-flow filtration unit (133).
